# EUROPEAN PATENT APPLICATION

(11) **EP 2 353 847 A1**
(43) Date of publication of application: **10.08.2011**
(21) Application number: 10151976.7
(22) Date of filing: 28.01.2010
(51) Int. Cl.: B29C 70/22, B29C 70/38, B32B 5/26, D04H 3/04

(54) **Method for making a composite material and structure, composite material and end product**

(71) Applicant: Stichting Nationaal Lucht- en Ruimtevaart Laboratorium, 1059 CM Amsterdam (NL)
(72) Inventor: Nagelsmit, Martin Herman, 1071 MG, Amsterdam (NL); Kassapoglou, Christos, 2611 EA, Delft (NL); Thuis, Hubertus Gerardus Stephanus Jozef, 8317 RA, Kraggenburg (NL); Gürdal, Zafer, 2611 GX, Delft (NL)
(74) Representative: Voncken, Bartholomeus Maria Ch.

(57) **Abstract**

A method is provided for making a composite material from strips comprising longitudinal fibres and a binder or resin. The strips are deposited in a pattern with strips extending in a first direction and other strips extending in a second direction, such that the completed composite material everywhere comprises multiple layers of strips one on top of the other, wherein the strips are positioned according to a regular pattern in a common plane exclusively by depositing them in said common plane without interweaving a strip with previous strips already deposited in said common plane, such that in the completed composite material at least a major part of the deposited strips at different places define different ones of the layers of strips positioned one on top of the other.

## Description

The invention firstly relates to a method for making a composite material from strips comprising longitudinal fibres and a binder or resin.

Such a method is known as automated fibre/tow placement. It generally uses materials that typically are composed of tapes, or strips, commonly known as "tows" or "slit/slit tapes" comprising longitudinal fibres and a binder (or resin). Individual strips or tows are manipulated to form a band of material that is deposited onto a tool. Parts are built up layer-by-layer with strips or tows of composite material, with the angle at which each layer ("ply") is deposited onto the tool being precisely determined by the fibre placement process.

Automated fibre/tow placement enables the construction of complex composite structures using steered or curvilinear fibre paths. This method of producing composite structures is more cost effective than manual methods. It provides an improved structural efficiency due to its ability to orient the fibres along local internal load paths, which potentially results in lighter structures that are also lower in cost than structures made by other production methods.

Composites fabricated with such automated fibre/tow placement are built-up in layers and are sensitive to damage. Even low speed impact can cause damage below the surface of the composite material that is not visible by the naked eye. Such damage, in the form of matrix cracks, delaminations (separation between layers or plies), and (usually limited) broken fibers, reduces the strength of the composite structure drastically, especially under compression and shear loads, and may lead to a catastrophic failure of a structure. The main reason for this sensitivity of the composite material to impact is the low out-of-plane strength of the matrix between plies where only resin (and no fibres) is present of which the strength is very low. The matrix between plies is, typically, at least an order of magnitude weaker than the fiber matrix combination in each ply. During impact, out-of-plane loads (perpendicular to the plane of the laminate) are generated which exceed the strength of the matrix between plies. As a result, the matrix cracks. These cracks coalesce into delaminations and may also break fibers. Accounting for this strength reduction in the presence of damage requires adding more material and thus increasing the weight of the structure.

Although it is possible to compensate for the strength reduction of such composite materials by making them thicker or by providing some sort of through-the-thickness reinforcement (usually achieved by stitching, weaving, braiding etc.), such measures increase the weight and the cost of such material. Further a through-the-thickness reinforcement tends to reduce the in-plane strength (the reinforcing fibers act as stress concentrations) and thus still more material is needed for achieving the required strength, further adding to the weight and cost.

With respect to the above there is a need for an alternative method for making a composite material that would be more tolerant to damages with no or hardly any increase in weight, and cost for the fabrication, of said composite material.

Thus, in accordance with the present invention the method is characterized by positioning the strips in a pattern with strips extending in a first direction and other strips extending in a second direction, such that the completed composite material everywhere comprises multiple layers of strips one on top of the other, wherein the strips are positioned according to a regular pattern in a common plane exclusively by depositing them in said common plane without interweaving a strip with previous strips already deposited in said common plane, such that in the completed composite material at least a major part of the deposited strips at different places define different ones of the layers of strips positioned one on top of the other.

The inventive method creates an interlocking pattern which improves the damage resistance and damage tolerance of composite materials significantly without increasing the structural weight. The pattern(s) created with the tows, which can be optimized for different loading situations and desired stacking sequences, provides a through-the-thickness reinforcement and contain the damage created during impact by not allowing delaminations to grow to the sizes that conventional composite materials exhibit under the same impact level. In a sense, they reinforce the layer between plies by allowing fibers to cross over from one ply to the next so the material does not rely solely on the matrix strength to carry the out-of-plane loads created during impact. The impact energy is redistributed among indentation, matrix crack creation, delamination formation and fiber breakage by reducing the areas of delaminations created and increasing the indentation depth and density of matrix cracks created. The reduced delamination sizes translate, in turn, to increased loads at which these composite materials (and structures comprising these) would buckle and cause failure of the entire structure. Thus, the damage tolerance of the composite material increases and less material is needed to meet the same requirements. As a result, composite materials and structures of significantly lower weight can be created.

In a preferred embodiment of the method according to the invention the completed composite material everywhere comprises two layers of strips one on top of the other, such that in the completed composite material at least a major part of the deposited strips at some places define the upper of the two layers of strips positioned one on top of the other and at other places define the lower of the two layers of strips positioned one on top of the other.

In an embodiment of the invention the method comprises the successive steps of
a. depositing a first group of parallel strips side by side at a predetermined spacing;
b. depositing, on top of the first group of strips, a second group of parallel strips side by side at said predetermined spacing and each extending at an angle α different from 180° with respect to the strips of the first group;
c. positioning, on top of the previously deposited groups of strips, a third group of parallel strips side by side at said predetermined spacing, in parallel to and immediately adjacent to the strips of the first group;
d. positioning, on top of the previously deposited groups of strips, a fourth group of parallel strips side by side at said predetermined spacing, in parallel to and immediately adjacent to the strips of the second group;
e. repeating the steps c. and d. until the predetermined spacings are completely occupied by adjacently positioned strips.

Depending on the chosen spacing differently configured materials are obtained. When, for example, the strips of each group are deposited at a spacing substantially equal to an integer multiple n of the strip width, step e. comprises repeating the steps c. and d. n-1 times. The value of n then determines the final composition of the composite material (disposition of and relation between strips).

According to an alternative embodiment of the method according to the present invention it comprises the successive steps of
f. depositing a first strip extending in a first direction and depositing on top of said first strip, extending in a second direction at an angle α with the first direction, a second strip;
g. depositing, on top of the previous strips, a third strip in parallel to the first strip at a predetermined spacing therefrom and depositing on top of said third strip, extending at said angle α therewith, a fourth strip at said predetermined spacing from the second strip;
h. repeating step g. a desired number of times, such that each third strip and each fourth strip deposited during a repetition of step h. is deposited at said predetermined spacing from the respective third and fourth strips deposited during the previous step h;
i. repeating steps f. until h. until the predetermined spacings are completely occupied by adjacently positioned strips, such that each first strip and each second strip deposited during a repetition of step f. is deposited in parallel to and immediately adjacent to the respective first and second strips deposited during the previous step f.

Whereas in the first embodiment mentioned above always a succession (group) of parallel strips is deposited followed by a succession (group) of parallel strips at an angle therewith, according to this alternative embodiment successive strips are deposited extending in different directions, which will lead to a different final pattern of strips in the completed composite material.

Also with respect to this alternative embodiment it is possible that the third and fourth strips are deposited at a spacing from the first and second strips, respectively, substantially equal to an integer multiple n of the strip width, wherein step i. comprises repeating the steps f. until h. n-1 times. Here also the value of n determines the final composition of the composite material (disposition of and relation between strips).

Depending on the specific application of the final composite material, it is possible that the angle α between the strips of the first group and the strips of the second group differs from 180°. When, in accordance with an embodiment of the method according to the invention, α = 90°, the strips will extend at right angles.

In a second aspect the invention relates to a method for making a composite structure, comprising the step of stacking composite materials made with the method according to the invention. The stacking may occur at different orientations.

In a third aspect of the present invention a composite material made from strips comprising longitudinal fibres and a binder or resin is provided, characterized by strips positioned in a pattern with strips extending in a first direction and other strips extending in a second direction, such that the completed composite material everywhere comprises multiple layers of strips one on top of the other, wherein the strips positioned according to a regular pattern in a common plane comprise exclusively strips deposited in said common plane, without strips that are interwoven with previous strips already deposited in said common plane, such that at least a major part of the deposited strips at different places define different ones of the two layers of strips positioned one on top of the other. Thereby a composite material with an interlocking pattern is obtained.

Preferably the composite material everywhere comprises two layers of strips one on top of the other, such that at least a major part of the deposited strips at some places define the upper of the two layers of strips positioned one on top of the other and at other places define the lower of the two layers of strips positioned one on top of the other.

Further examples of embodiments of composite materials in accordance with the present invention are provided by claims 12-17.

In a fourth aspect of the present invention an end product is provided comprising at least one layer of the composite material according to the present invention.

It is possible too, however, that the end product according to the invention comprises multiple layers of the composite material stacked one on top of the other, depending on the application of the end product. While the previous description primarily gave the details of two layers (plies) created by the inventive method, analogous steps can be followed for creating stacks where three or more layers can be grouped into the said configuration with strips from one layer alternatively becoming part of the layer(s) above it and the layer(s) below it. Successive layers of the composite material may be stacked at differing orientations.

Hereinafter the invention will be elucidated while referring to the drawings, in which:
Figure 1 is a sketch for explaining a first group of embodiments of the invention;
Figure 2 shows four successive stages during making a first embodiment of a composite material;
Figure 3 illustrates a second embodiment of a composite material;
Figure 4 shows four successive stages during making a third embodiment of a composite material;
Figure 5 illustrates a fourth embodiment of a composite material, and
Figure 6 is a sketch for explaining a second group of embodiments of the invention.

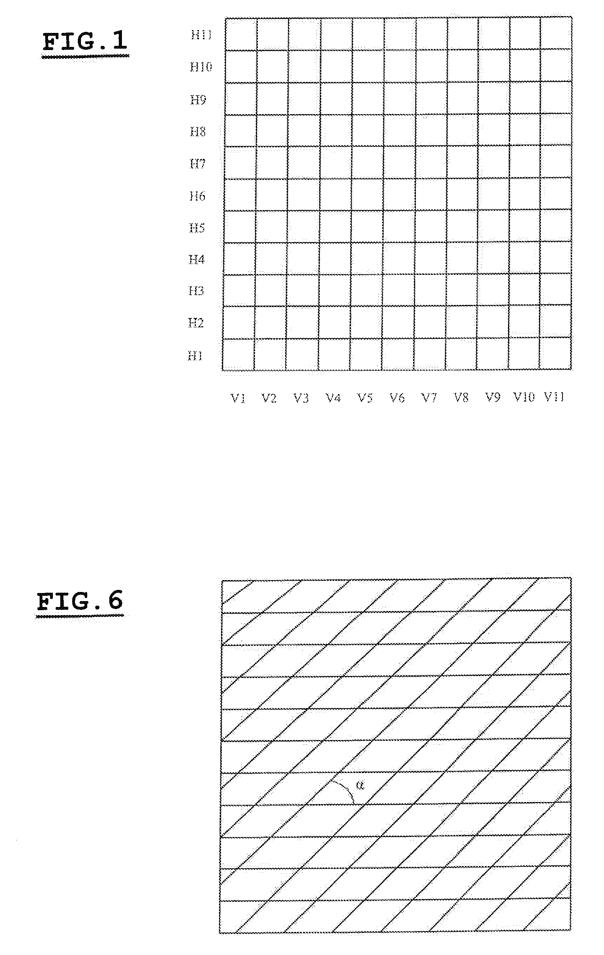

Firstly referring to figure 1 a first group of embodiments of the method according to the present invention will be elucidated. Figure 1 shows a sketch with a pattern of horizontal arrays H1-H11 and vertical arrays V1-V11. The angle between the horizontal and vertical arrays is 90°.

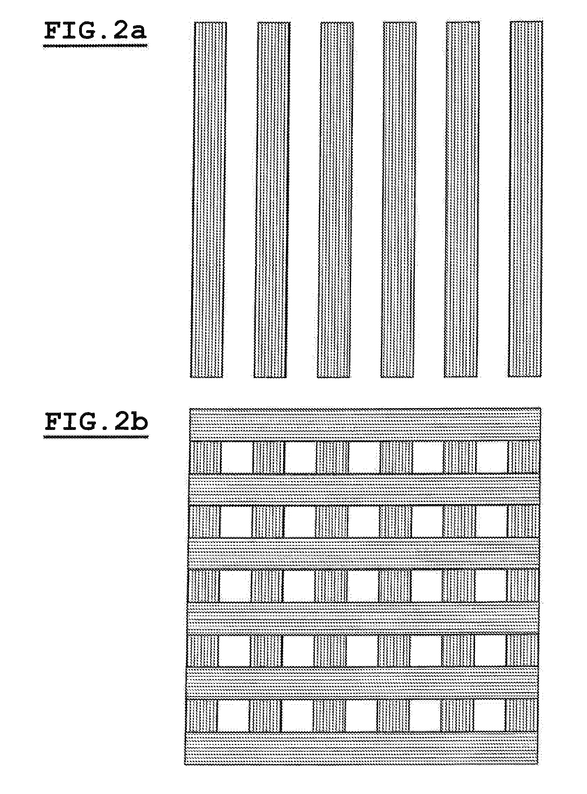

According to a first embodiment of the method according to the present invention firstly a first group of parallel strips is positioned side by side at a predetermined spacing (said spacing in this embodiment being equal to the width of an array) according to vertical arrays V1, V3, V5, V7, V9 and V11. The result is illustrated in figure 2a.

Next, on top of the first group of strips, a second group of parallel strips is deposited side by side at said predetermined spacing and each extending at the angle of 90° with respect to the strips of the first group according to the horizontal arrays H1, H3, H5, H7, H9 and H11. The resulting pattern is illustrated in figure 2b.

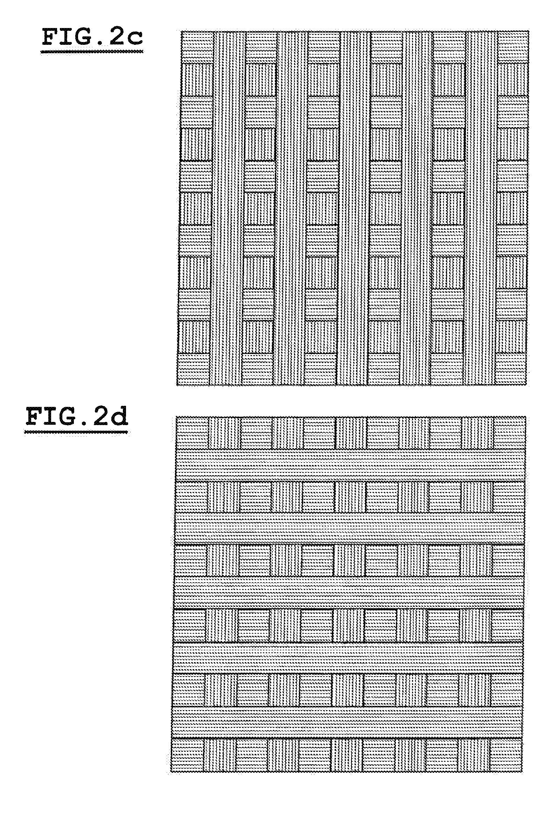

Now, on top of the previously deposited groups of strips, a third group of parallel strips is deposited side by side at said predetermined spacing, in parallel to and immediately adjacent to the strips of the first group at vertical arrays V2, V4, V6, V8 and V10. This yields the pattern as shown in figure 2c.

Finally, on top of the previously deposited groups of strips, a fourth group of parallel strips is deposited side by side at said predetermined spacing, in parallel to and immediately adjacent to the strips of the second group according to horizontal arrays H2, H4, H6, H8 and H10. This completes the composite material as shown in figure 2d.

In this embodiment the strips of each group are deposited at a spacing substantially equal to the strip width. However, it is possible too to make a composite material in which the strips of each group are deposited at a spacing substantially equal to an integer multiple n of the strip width. In such a case the last two steps of depositing the third and fourth groups of strips should be repeated n-1 times until the predetermined spacings are completely occupied by adjacently positioned strips.

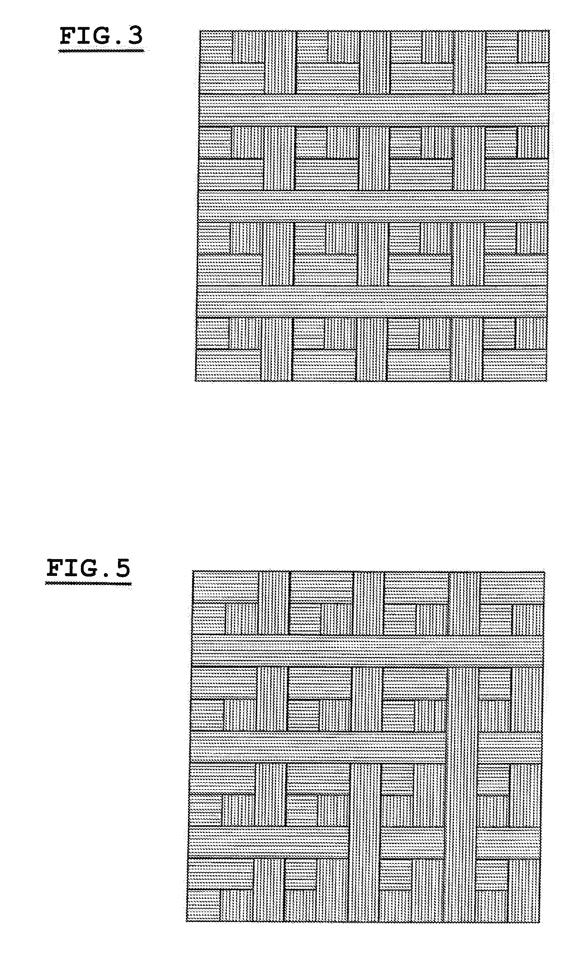

When, for example n=2 (spacing between adjacent strips of the first or second groups being twice the width of a strip) the deposition of the third and fourth groups should be repeated once (n-1 = 1), leading to a pattern of strips in the final composite material as illustrated in figure 3.

Again referring to figure 1, a second group of embodiments of the method according to the present invention will be elucidated.

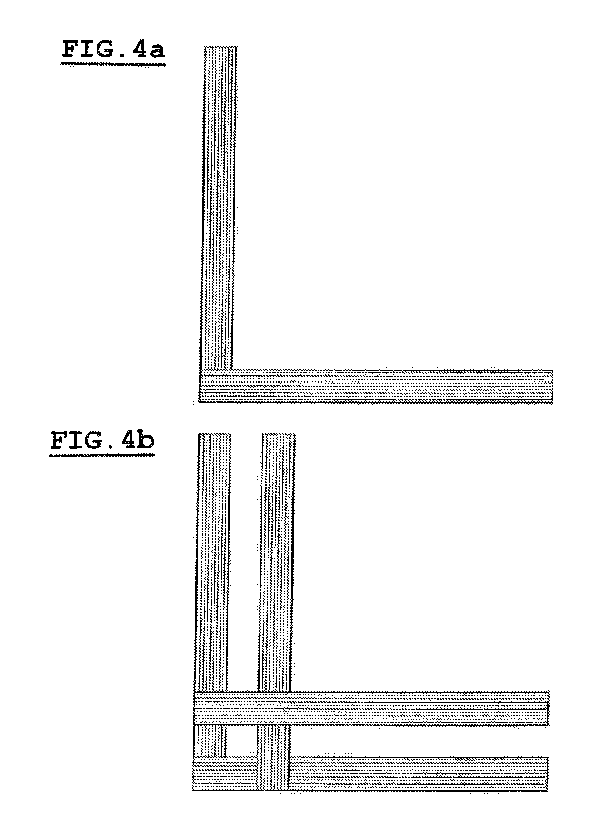

Firstly a first strip extending in a first direction is deposited according to vertical array V1 and on top of said first strip, extending in a second direction (at an angle of 90° with the first direction) a second strip is positioned according to horizontal array H1. The result is illustrated in figure 4a.

Next, on top of the previous strips, a third strip is positioned in parallel to the first strip at a predetermined spacing (in this case again equal to the strip width) therefrom according to vertical array V3 and on top of said third strip a fourth strip is positioned at said predetermined spacing from the second strip according to horizontal array H3. Te resulting pattern is illustrated in figure 4b.

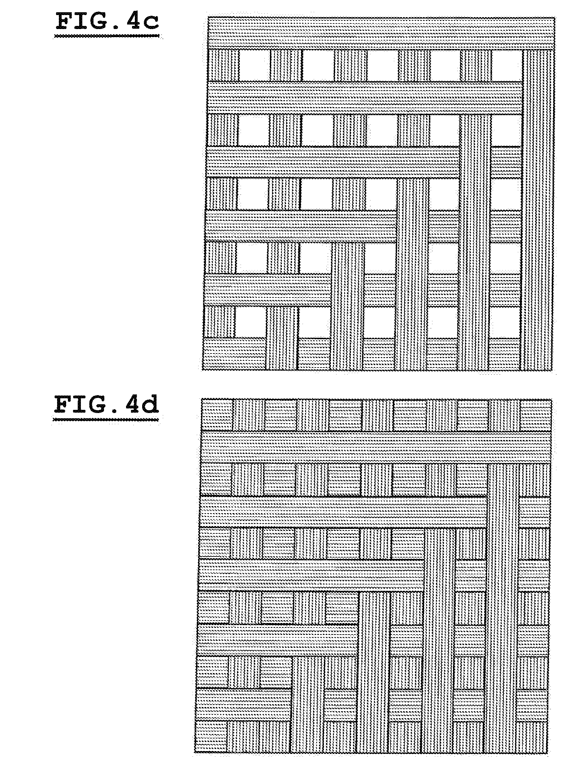

The positioning of additional third and fourth strips is repeated a desired number of times, such that each third strip and each fourth strip deposited during such a repetition is deposited at said predetermined spacing from the respective third and fourth strips deposited previously; this results in the pattern illustrated in figure 4c.

Finally the entire process described before is repeated until the predetermined spacings are completely occupied by adjacently positioned strips, such that each first strip and each second strip deposited during a repetition is deposited in parallel to and immediately adjacent to the respective first and second strips deposited during the previous step. When the spacing is equal to the strip width, there will be only one repetition of the process, leading to the final composite material as illustrated in figure 4d.

However, also in this group of embodiments it is possible to choose a spacing equal to an integer multiple n of the strip width. In such a case the number of repetitions will be n-1. For example figure 5 shows the final composite material as obtained in accordance with the second group of embodiments with n=2 (spacing between adjacent strips of the first or second groups being twice the width of a strip).

In the embodiments illustrated before the angle between the strips is 90°. However, also other angles are possible. For example shows figure 6 a sketch with an angle α of 45°. Substituting the vertical arrays of figure 1 with the inclined arrays of figure 6, the first and second groups of embodiments lead to similar patterns of the strips in the final composite materials, however with the difference that the strips are not at right angles, but at angles of 45° with each other. The choice of the angle may depend on the required characteristics of the final composite material.

Depositing the strips may be carried out in an automated manner by appropriate machines. Such machines may be devised to carry out more than one process simultaneously and in parallel.

The resulting composite material has a pattern in which at each location two layers of strips are positioned one on top of the other, in such a manner that the majority of the strips at some places define the upper layer and at other places define the lower layer. The strip arrangement, however, is obtained exclusively by depositing the strips successively one on top of the other in a well defined manner without interweaving strips.

The invention is not limited to the embodiments described before which may be varied in many ways within the scope of the invention as defined by the appending claims. For example it is possible to combine the features of the first and second group of embodiments.

## Claims

1. Method for making a composite material from strips comprising longitudinal fibres and a binder or resin, **characterized by** positioning the strips in a pattern with strips extending in a first direction and other strips extending in a second direction, such that the completed composite material everywhere comprises multiple layers of strips one on top of the other, wherein the strips are positioned according to a regular pattern in a common plane exclusively by depositing them in said common plane without interweaving a strip with previous strips already deposited in said common plane, such that in the completed composite material at least a major part of the deposited strips at different places define different ones of the layers of strips positioned one on top of the other.

2. Method according to claim 1, wherein the completed composite material everywhere comprises two layers of strips one on top of the other, such that in the completed composite material at least a major part of the deposited strips at some places define the upper of the two layers of strips positioned one on top of the other and at other places define the lower of the two layers of strips positioned one on top of the other.

3. Method according to claim 2, comprising the successive steps of
a. depositing a first group of parallel strips side by side at a predetermined spacing;
b. depositing, on top of the first group of strips, a second group of parallel strips side by side at said predetermined spacing and each extending at an angle α different from 180° with respect to the strips of the first group;
c. positioning, on top of the previously deposited groups of strips, a third group of parallel strips side by side at said predetermined spacing, in parallel to and immediately adjacent to the strips of the first group;
d. positioning, on top of the previously deposited groups of strips, a fourth group of parallel strips side by side at said predetermined spacing, in parallel to and immediately adjacent to the strips of the second group;
e. repeating the steps c. and d. until the predetermined spacings are completely occupied by adjacently positioned strips.

4. Method according to claim 3, wherein the strips of each group are deposited at a spacing substantially equal to an integer multiple n of the strip width and wherein step e. comprises repeating the steps c. and d. n-1 times.

5. Method according to claim 2, comprising the successive steps of
f. depositing a first strip extending in a first direction and depositing on top of said first strip, extending in a second direction at an angle α with the first direction, a second strip;
g. depositing, on top of the previous strips, a third strip in parallel to the first strip at a predetermined spacing therefrom and depositing on top of said third strip, extending at said angle α therewith, a fourth strip at said predetermined spacing from the second strip;
h. repeating step g. a desired number of times, such that each third strip and each fourth strip deposited during a repetition of step h. is deposited at said predetermined spacing from the respective third and fourth strips deposited during the previous step h;
i. repeating steps f. until h. until the predetermined spacings are completely occupied by adjacently positioned strips, such that each first strip and each second strip deposited during a repetition of step f. is deposited in parallel to and immediately adjacent to the respective first and second strips deposited during the previous step f.

6. Method according to claim 5, wherein the third and fourth strips are deposited at a spacing from the first and second strips, respectively, substantially equal to an integer multiple n of the strip width and wherein step i. comprises repeating the steps f. until h. n-1 times.

7. Method according to any of the claims 3-6, wherein the angle α between the strips of the first group and the strips of the second group differs from 180°.

8. Method according to any of the claims 3-6, wherein α = 90°.

9. Method for making a composite structure, comprising the step of stacking composite materials made with the method according to any of the previous claims.

10. Composite material made from strips comprising longitudinal fibres and a binder or resin, **characterized by** strips positioned in a pattern with strips extending in a first direction and other strips extending in a second direction, such that the completed composite material everywhere comprises multiple layers of strips one on top of the other, wherein the strips positioned according to a regular pattern in a common plane comprise exclusively strips deposited in said common plane, without strips that are interwoven with previous strips already deposited in said common plane, such that at least a major part of the deposited strips at different places define different ones of the two layers of strips positioned one on top of the other.

11. Composite material according to claim 10, comprising everywhere two layers of strips one on top of the other, such that at least a major part of the deposited strips at some places define the upper of the two layers of strips positioned one on top of the other and at other places define the lower of the two layers of strips positioned one on top of the other.

12. Composite material according to claim 11, comprising a first group of parallel strips deposited side by side at a predetermined spacing; on top of the first group of strips, a second group of parallel strips deposited side by side at said predetermined spacing and each extending at an angle α different from 180° with respect to the strips of the first group; on top of the previously deposited groups of strips, a third group of parallel strips positioned side by side at said predetermined spacing in parallel to and immediately adjacent to the strips of the first group; on top of the previously deposited groups of strips, a fourth group of parallel strips positioned side by side at said predetermined spacing in parallel to and immediately adjacent to the strips of the second group; and, on top of the previously deposited groups of strips, a number of additional third and fourth groups of parallel strips completely occupying the predetermined spacings.

13. Composite material according to claim 12, wherein the strips of each group are deposited at a spacing substantially equal to an integer multiple n of the strip width and wherein the number of additional third and fourth groups of parallel strips completely occupying the predetermined spacings each equals n-1.

14. Composite material according to claim 11, comprising a first strip extending in a first direction and, deposited on top of said first strip and extending in a second direction at an angle α with the first direction, a second strip; on top of the previous strips, a third strip deposited in parallel to the first strip at a predetermined spacing therefrom and, deposited on top of said third strip and extending at said angle α therewith, a fourth strip at said predetermined spacing from the second strip; on top of the previous strips, a number of additional third and fourth strips of which each additional third strip and each additional fourth strip is deposited at said predetermined spacing from the respective previously deposited third and fourth strips; and, positioned on top of the pattern of strips obtained in such a manner, additional similar patterns of which each first strip and each second strip is deposited in parallel to and immediately adjacent to the respective first and second strips of a previous pattern, the predetermined spacings being completely occupied by adjacently positioned strips.

15. Composite material according to claim 14, wherein the third and fourth strips are deposited at a spacing from the first and second strips, respectively, substantially equal to an integer multiple n of the strip width and wherein the number of additional similar patterns equals n-1.

16. Composite material according to any of the claims 12-15, wherein the angle α between the strips of the first group and the strips of the second group differs from 180°.

17. Composite material according to any of the claims 12-15, wherein α = 90°.

18. End product comprising at least one layer of the composite material according to any of the claims 10-17.

19. End product according to claim 18, comprising multiple layers of the composite material stacked one on top of the other.
